# EUROPEAN PATENT SPECIFICATION

(11) **EP 3 575 152 B1**
(45) Date of publication and mention of the grant of the patent: **30.09.2020**
(21) Application number: 18178972.8
(22) Date of filing: 21.06.2018
(51) Int. Cl.: B60R 9/06, B60R 9/10

(54) **LOAD CARRIER, IN PARTICULAR BICYCLE CARRIER**
LASTENTRÄGER, INSBESONDERE FAHRRADTRÄGER
SUPPORT DE CHARGE, EN PARTICULIER SUPPORT DE BICYCLETTE

(30) Priority: 31.05.2018 CN 201810552095
(43) Date of publication of application: 04.12.2019
(73) Proprietor: Carman Enterprise Co., Ltd., Yuhang District Hangzhou Zhejiang 311121 (CN)
(72) Inventor: Wang, Junqiang, Hanghzou City, Zhejiang 310000 (CN)
(74) Representative: Paul & Albrecht Patentanwälte PartG mbB

(56) References cited:
- EP-A1- 1 876 063
- EP-A2- 2 487 072

## Description

The invention relates to a load carrier, in particular a bicycle carrier, for a vehicle, with a base that is to be attached at the vehicle and a carrying device that is held at the base and has at least one reception area for a load, in particular a bicycle, wherein the base and the carrying device are connected to each other via at least one sliding guide that provides a sliding path and that is embodied and arranged in such a manner that, by means of the at least one sliding guide, the carrying device can be displaced relative to the base from a first retracted end position into a second extended end position in particular linearly, wherein the at least one sliding guide comprises two sliding elements that are mounted at each other in particular in a linearly displaceable manner, and that a locking device is provided by means of which the at least one sliding guide can be locked in the retracted end position.

Load carriers for vehicles are already known from the state of the art in various designs. For example, a bicycle carrier that is to be attached at the draw bar of a vehicle is described in DE 20 2010 000 367 U1. It comprises a C-shaped tubular profile serving as a base which is attached by means of U-shaped clamps at the two side rails of the draw bar that are converging in a V-shaped manner, with a carrying device with two reception areas for respectively one bicycle being held thereat. A problem with such bicycle carriers is that, in particular in trailers, a stowage space that is closed with a flap is often also located in the front area, with the flap being swung open towards the front side of the trailer, that is, in the direction of the draw bar. If a bicycle carrier as it already known from DE 20 2010 000 367 U1 is mounted on a draw bar, it is usually no longer possible to open the flap of the stowage space, and the objects located therein cannot be accessed.

According to DE 295 12 566 U1, this problem is solved by providing the bicycle carrier with a folding frame by means of which the carrying device is connected to the base. In that case, the carrying device can be flapped forward, that is, away from the trailer, in the mounted state together with the bicycles held thereat, whereby space for accessing the front area of the trailer is created.

Another load carrier is described in DE 20 2005 004 043 U1. It has a coupling for connection to the trailer hitch of a vehicle. Extending from the coupling is a base that holds a carrying device with reception areas for two bicycles. The base and the carrying device are connected to each other via a sliding-tilting element, so that the carrying device can be moved away from the vehicle even in the mounted and loaded state to facilitate access to the stowage space. For this purpose, a provided locking device is released by the user and the carrying device is moved away from the vehicle. After the user has accessed the stowage space, the carrying device is brought back into the retracted end position and the locking device is actuated by the user. Another load carrier is described in EP 2 487 072 A2.

The option of locking is important since an unintended moving out of the carrying device from the retracted end position -for example during a driving process of the vehicle on the road - is associated with a high risk of accident and injury. In principle, known load carriers with an associated locking device have proven to work well. However, the need for improved load carriers still remains.

Thus, based on the state of the art, it is the objective of the present invention to indicate a load carrier that facilitates particularly reliable and comfortable use.

In the load carrier of the abovementioned type, this objective is achieved by the locking device comprising at least one locking bolt that is held at one of the two sliding elements so as to be movable between a blocked position and a release position, and by the locking bolt being pre-loaded in the direction of the blocked position, wherein a mechanism is provided which is automatically activated as the locking bolt is being transferred from the blocked position into the release position and which holds the locking bolt in the release position, so that the sliding elements can be freely displaced with respect to one another, and which, as the carrying device is being moved into the first retracted end position, automatically releases the locking bolt either shortly before or upon reaching the retracted end position, so that the locking bolt is moved into the blocking position and locking takes place.

The load carrier according to the invention has a plurality of advantages. Since only a comparatively small amount of force is necessary for displacing the carrying device by means of the at least one sliding guide provided according to the invention, also older individuals and women can move the carrying device including the load attached thereto, such as for example one or multiple bicycles, into a position that facilitates the access to a stowage space and subsequently move it back again in a particularly convenient and safe manner. At that, any damages to a towing vehicle are reliably prevented from occurring, as the orientation of the carrying device and of the loads attached thereto does not have to be changed, in particular they do not have to be tilted in the direction of the towing vehicle. If the carrying device carries one or multiple bicycles, their orientation can remain at least substantially vertical at all times, and the risk of the bicycles getting detached is considerably reduced as compared to known bicycle carriers in which a tilting motion occurs.

According to the invention, the load carrier is equipped with a mechanism which ensures that, when the at least one sliding guide is brought back from the extended into the retracted end position, the two sliding elements of the sliding guide are automatically secured against each other, and thus any moving out of the carrying device from the retracted end position is no longer possible. For one thing, the convenience is considerably increased in this manner, as a user only has to push back the carrying device into the retracted end position and a locking occurs automatically without any further handling by the user. At the same time, a particularly high degree of safety is ensured due to the fact that thanks to the automatism a locking always occurs automatically and cannot be forgotten.

When a locking bolt of the locking device is brought into the release position - in particular manually by a user -, the mechanism provided according to the invention is automatically activated and holds the locking bolt in this position. When the user releases the locking bolt or a handle connected to the same after the movement into the release position has occurred, the bolt remains in the release position, and the sliding elements can be freely displaced against each other, or, if one of the two sliding elements is affixed in a stationary manner, the other sliding element can be displaced against the same. The user can then bring the carrying device, which may for example be loaded with one or multiple bicycles, into an extended position and can easily and conveniently access a stowage space inside the vehicle. If the user subsequently pushes the carrying device back into the retracted end position, locking occurs automatically.

In an expedient design, the locking device comprises a recess which is provided in the other one of the two sliding elements and into which an end area of the locking bolt engages when it is in the blocked position, whereby a reliable securing of the two sliding elements of the at least one sliding guide can be achieved.

According to a particularly preferred embodiment a holding element is provided that has a holding section which automatically engages with a projection provided at the locking bolt, when the locking bolt is transferred from the blocked position into the release position. The projection preferably is formed by a retaining ring that encloses the locking bolt and is fixed thereto. The holding element furthermore is preferably held at the one sliding element so as to be moveable between a holding position and a free-running position, in particular so as to be pivotable about a pivot axis, and particularly preferably is pre-loaded in the direction of the holding position.

A spring element assigned to the holding element can be provided for pre-loading the holding element in the direction of the holding position. In the case that the holding element is held so as to be pivotable about a pivot axis, this can in particular be a torsion spring. The same may apply alternatively or additionally to the locking bolt which is pre-loaded in the direction of the blocked position and to which a spring element can be assigned alternatively or additionally, for example a compression spring or coil spring through which the locking bolt extends.

A further preferred embodiment is characterized in that the holding element has a step- or hook-shaped holding section, wherein, when the locking bolt is in the release position and the holding element is in the holding position, particularly preferably a bottom side of the projection provided at the locking bolt rests on a top side of the step- or hook-shaped holding section. This arrangement has proven to be particularly advantageous for holding the locking bolt securely in the release position by means of the holding element. It is further preferable if the arrangement is such that, in the holding position, the top side of the step- or hook-shaped holding section is aligned so as to be at least substantially orthogonal to the locking axis along which the locking bolt is movable between the locking position and the release position as it is held at the one sliding element.

In a further preferred embodiment the holding element has a tapered section, which preferably tapers into the direction of the other sliding element. The arrangement is then preferably realized in such a manner that the projection provided at the locking bolt is engaged with and moved along the tapered section when the locking bolt is transferred from the blocked position into the release position and the holding element is pressed from the holding position into the free-running position. The tapered section can for example be at least substantially V-shaped. It can further be that the holding element has an arcuate section or a section with an arcuate outside contour with which the projection provided at the locking bolt engages or is engaged if it is moved from the locking position into the release position, wherein the arcuate section is preferably designed in such a manner and the arrangement is realized in such a manner that the projection provided at the locking bolt is moved along the arcuate section or outer contour, and the holding element is in a particular appropriate manner pressed from the holding position into the free-running position when the locking bolt is transferred from the blocked position into the release position. The arcuate outside contour can form one side of the tapered section.

Further, the locking bolt and/or the holding element can be held so as to be movable at an insert element inserted into the sliding element. The insert element can for example be inserted into a reception area that is provided in the one sliding element and can be attached with fixation means, such as for example screws. If an insert element is provided, it is preferably formed as an at least substantially cuboid hollow body. Alternatively or additionally, the insert element has two aligned bore holes through which the locking bolt extends. The aligned bore holes are in particular provided in two facing walls of the insert element. Further, the insert element and the locking bolt are preferably dimensioned and arranged in such a manner that the locking bolt extends through both aligned holes in the blocked position as well as in the release position.

In a further embodiment of the load carrier according to the invention a releasing element is provided that is held at the other sliding element so as to be movable between a retracted position and a projecting position. The releasing element is preferably pre-loaded in the direction of the projecting position, and in particular has a ramp-shaped end area which preferably rises in a ramp-shaped manner in the direction of the extended end position and engages with an end area of the holding element when the carrying device is brought from a retracted position into the extended end position, or vice versa. Particularly preferably, the end area of the holding element engages with the ramp-shaped end area of the releasing element shortly before or upon reaching the retracted end position. Alternatively or additionally, it can be provided that in the projecting position the ramp-shaped end area of the releasing element protrudes in the direction of the one sliding element to beyond an edge of the other sliding element.

Assigned to the releasing element is preferably one spring element by means of which the releasing element is pre-loaded in the direction of the projecting position. The spring element can be a compression spring or a coil spring through which a holding pin for the releasing element extends.

The arrangement is preferably such that, when the carrying device is brought into the second extended end position, the engaging end area of the holding element is moved in the ascending direction across the ramp-shaped end area of the releasing element and presses the releasing element into the retracted position, and/or that, when the carrying device is brought into the first retracted end position, the engaging end area of the holding element abuts against the higher side of the ramp-shaped end section and is thus moved from the holding position into the free-running position, whereby the locking bolt is automatically released.

A pre-loaded releasing element with a ramp-shaped end area makes it possible that, when the at least one sliding guide is moved from the first retracted end position into the second extended end position, the holding element can pass the releasing element without significant resistance, but that its position is changed in the event of a movement in the other direction when it is engaged, in concrete terms is moved from the holding position into the free-running position, whereby the locking bolt is released and automatic locking is achieved.

In a further development, it can further be provided that the two sliding elements of the at least one sliding guide are mounted against each other so as to be displaceable in a linear manner along a displacement axis, and the locking bolt is held at the one sliding element so as to be movable along a locking axis that is oriented at least substantially perpendicular to the displacement axis, which has proven to be a particularly advantageous design.

In a further particularly expedient embodiment, the sliding path is restricted by at least one end position stop at least in the extended end position, preferably being restricted by end position stops in both end positions. The sliding path can for example be at least 25 cm, preferably at least 30 cm, particularly preferably at least 35 cm.

The at least one sliding guide can have glide elements and/or glide bearings to facilitate or improve displaceability. Alternatively or additionally, a set of rollers with at least two rollers can be provided by means of which the two sliding elements of the at least one sliding guide are guided in a displaceable manner.

Further, it can be provided that the sliding elements are formed as tubes with an at least substantially quadrangular, in particular rectangular cross-section, or as profiles having for example an at least substantially U-shaped or L-shaped cross-section.

With respect to the at least one sliding guide, it further applies that preferably one sliding element of the at least one sliding guide is attached at the base and the other sliding element of the at least one sliding guide is attached at the carrying device or integrally formed therewith. Preferably, the one sliding element at which the locking bolt is held in a movable manner is connected to the carrying device or integrally formed therewith. The at least one sliding guide may comprise a lower and an upper sliding element, and in particular the upper sliding element is that sliding element at which the locking bolt is held.

In principle, it is possible that the base and the carrying device are connected to each other by means of only one sliding guide. However, in a preferred design, the base and the carrying device are connected to each other by means of at least two sliding guides that are arranged at a distance from each other and preferably extend at least substantially in parallel to each other. In that case, preferably one locking device is assigned to each sliding guide. If two or more sliding guides with locking devices are provided, all above-described features can apply respectively on their own or in combination to multiple sliding guides with locking devices, in particular the sliding guides with locking devices can be constructed identically.

In a particularly preferred embodiment of the load carrier according to the invention, the base and the carrying device are connected to each other by means of exactly two sliding guides. Particularly in that case, the base preferably comprises at least two rod-shaped base elements that extend at least substantially in parallel to each other and preferably have a rounded or quadrangular cross-section, and of each base element one axial end is attached at the one sliding guide and the respectively other axial end is attached at the other sliding guide. This arrangement has proven to be particularly advantageous, in particular in the case that the load carrier according to the invention is to be attached at the draw bar of a vehicle, such as a trailer, wherein in that case in particular the two base elements are provided with attachment means, such as mounting brackets, which in turn can be affixed at a preferably V-shaped draw bar of a vehicle to attach the load carrier.

In another embodiment, the carrying device comprises at least one elongated support rail that, at the top side, forms an in particular U-shaped or V-shaped groove for receiving at least one wheel of a bicycle. The carrying device can also comprises at least one pair of two elongated support rails, wherein the two support rails are arranged on a common axis and at a distance from each other in the axial direction, preferably of at least 20 cm, particularly preferably of at least 30 cm. Then each support rail of a pair can receive one wheel of a bicycle.

According to a further embodiment at least one support rail extends parallel to the at least one sliding guide and preferably is integrally formed to one of the sliding elements of the at least one sliding guide, in particular forms one side of one of the two sliding elements. A configuration where one or more support rails extend parallel to the sliding guide or sliding guides is particularly suitable when the inventive load carrier is to be disposed within a vehicle. The carrying device can furthermore comprise at least one mounting bracket.

The carrying device can further have a basic element which has a recess that is open towards the direction of the extended end position and serves for receiving an appliance of the vehicle in the extended end position of the carrying device, wherein the basic element is in particular formed as a B-shaped or double-S-shaped tubular profile. If the carrying device also comprises at least one support rail, it can be held at the basic element.

In that case, there is space for appliances of the vehicle, in particular of a draw bar of the vehicle, between the two support rails and/or the two halves of the B-shaped or S-shaped tubular profile, for example a coupling head mounting, a support wheel, or also a crank for height adjustment of a support wheel that protrudes upwards beyond the draw bar in an upper position, or the like. The carrying device can then be easily pushed into the extended end position, without the support rails and/or the basic element colliding with a vehicle appliance, such as a draw bar appliance.

In a further preferred embodiment, the arrangement is realized in such a manner that, when mounted according to the intended use, the carrying device is horizontally movable, which has proven to be particularly suitable, as the force to be applied for moving the carrying device from the retracted into the extended end position and vice versa is particularly small in that case.

The base preferably comprises or is formed by at least two tubular base elements. The base elements are preferably arranged at a distance from each other and extend at least substantially parallel to each other. A base with at least two tubular base elements has proven to be particularly suitable to be arranged and in particular fixed on the drawbar of a vehicle or in a vehicle interior.

The load carrier according to the invention, in particular a bicycle carrier, can for example be embodied as a load carrier that is to be attached at the draw bar or also at the trailer hitch of a vehicle. The load carrier can also be designed as a load carrier that is to be attached in the interior space of a vehicle. In the latter case due to the at least one sliding element the carrying device can be pulled at least partly outside of the vehicle to have easy access in particular for loading and unloading.

The drawing illustrates the invention in more detail based on two exemplary embodiments. Herein:
- Figure 1: shows a first exemplary embodiment of a bicycle carrier according to the invention in a schematic perspective view from obliquely above;
- Figure 2: shows an enlarged, partially sectioned rendering of a sliding guide of the bicycle carrier of Figure 1;
- Figure 3: shows a partial cross section through the sliding guide of Figure 2;
- Figure 4: shows an enlarged sectional view of the insert element of the sliding guide from Figure 2 that supports the locking bolt and the holding element;
- Figures 5 to 13: shows enlarged partial sectional views of the sliding guide of Figure 2, wherein respectively only that end area of the sliding guide that points to the left in Figure 2 as well as different positions of the locking bolt and the sliding elements are shown for illustrating the functionality of the automatic locking device.
- Figure 14: shows a second exemplary embodiment of a bicycle carrier according to the invention in a schematic perspective view from the side with the carrying device in the extended end position; and
- Figure 15: shows the bicycle carrier of Figure 14 with the carrying device in the retracted end position.

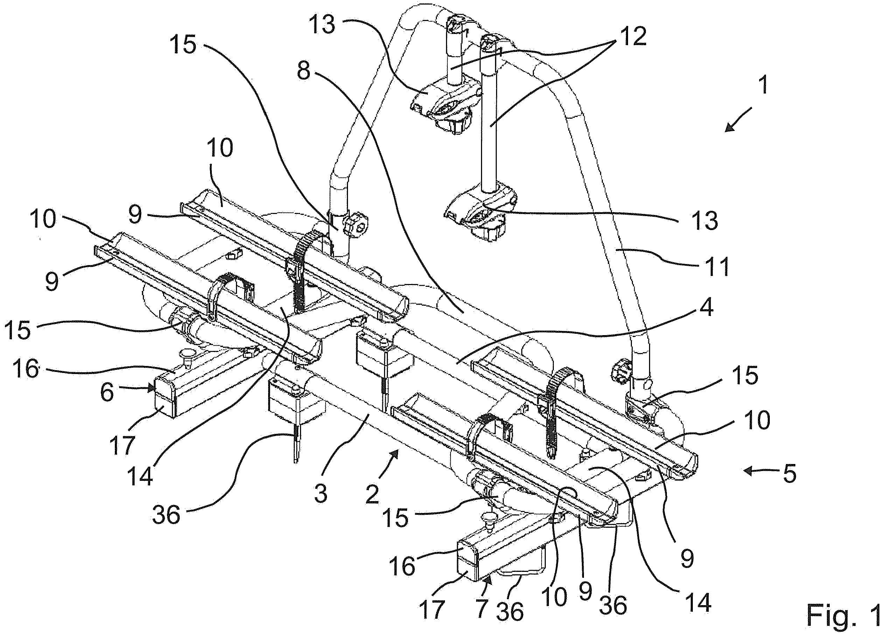

Figure 1 shows a first exemplary embodiment of a load carrier according to the invention which in the present case is embodied as a bicycle carrier 1 for attaching at the draw bar of a vehicle that is not shown in the Figures and that in the present case is a trailer caravan.

The bicycle carrier 1 comprises a base 2 which is to be attached at the draw bar, in concrete terms at the two side rails of the draw bar that converge in a V-shaped manner, and which is formed by two tubular base elements 3, 4 that are arranged at a distance from each other and extend in parallel to each other. The bicycle carrier 1 further comprises a carrying device 5 for two bicycles, which are not shown in the Figures, and two identically constructed sliding guides 6, 7 by means of which the base 2 and the carrying device 5 are connected to each other.

In the shown exemplary embodiment, the carrying device 5 has a support frame 8 formed by a tubular profile that is approximately B-shaped in the top view. Attached at the support frame 8 are in total four support rails 9 for two bicycles. As can be seen in the Figures, respectively two support rails 9 are arranged on a common axis and at a distance from each other in the axial direction, wherein in the present case the distance between respectively two support rails 9 is approximately 40 cm. On the top side, each support rail 9 has a groove 10 for receiving the wheel of a bicycle, which is U-shaped in the present case. Projecting perpendicularly upwards from the support frame 8 is a mounting bracket 11 at which bicycles that are put into the grooves 10 can be attached by means of adjustably held clamp bars 12 and clamp elements 13.

Connecting to the mounting bracket 11 at the bottom side are two U-shaped tubular profiles 14 of the carrying device 5 that extend in parallel to each other and by means of which the support frame 8 is connected by means of in total four connection elements 15. Of the two U-shaped tubular profiles 14, respectively one is affixed at the top side of a sliding guide 6, 7.

According to the invention, the sliding guides 6, 7 are formed and arranged in such a manner that by means of them the carrying device 5 can be linearly displaced relative to the base 2 from a retracted end position (cf. Figure 1) located closer to the trailer caravan, which is not shown here, into an extended end position located further away from the trailer caravan. In the shown exemplary embodiment, the sliding path provided by means of the two sliding guides 6, 7 is approximately 40 cm.

The sliding guides 6, 7 extend in parallel to each other and have respectively two sliding elements that are mounted against each other in a linearly displaceable manner, in concrete terms respectively an upper sliding element 16 and a lower sliding element 17. In the present case, the two upper sliding elements 16 and lower sliding elements 17 are respectively provided by extruded hollow profiles made of metal.

As can be seen in Figure 1, the carrying device 5, in concrete terms its U-shaped tubular profiles 14, are respectively fixated at the upper sliding element 16 of one of the two sliding guides 6, 7. Further, the axial ends of the two tubular base elements 3, 4 of the base 2 are attached at the respectively lower sliding element 17. Thus, in the mounted state, the lower sliding elements 17 form resting sliding elements 17, with the upper sliding elements 16 being displaceable with respect to them.

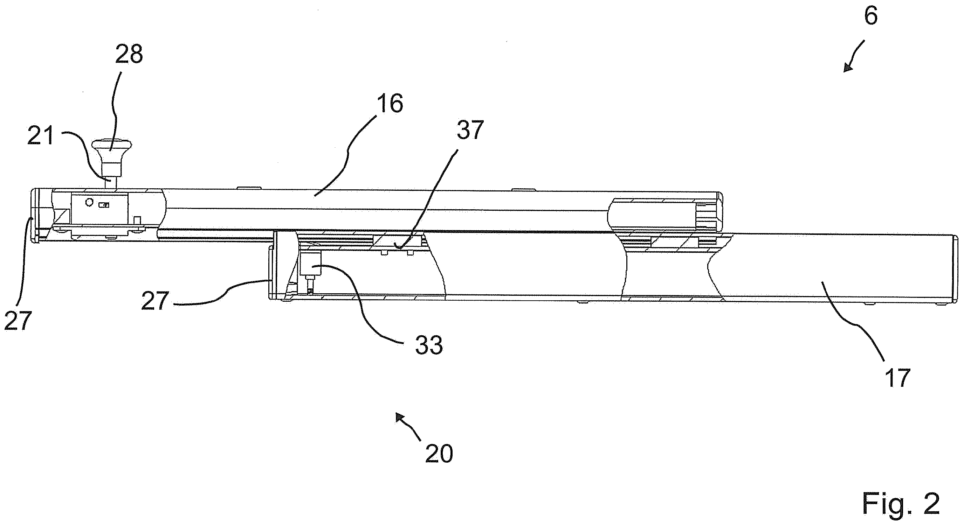

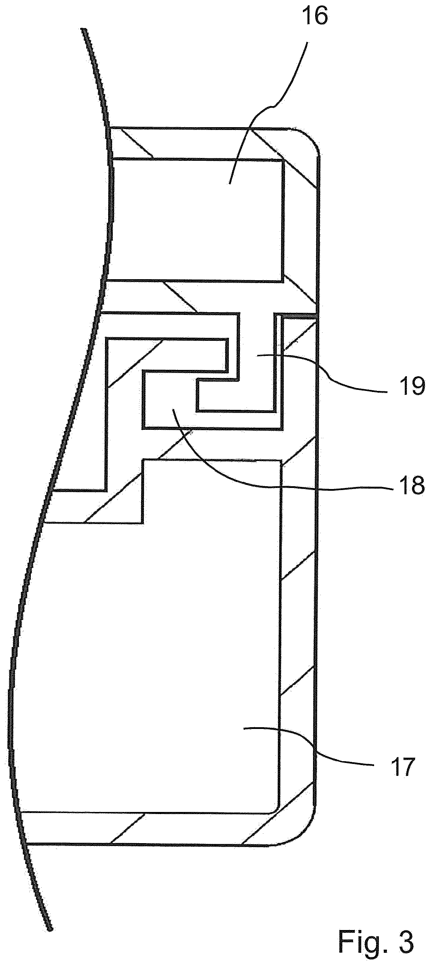

While Figure 2 illustrates one of the two sliding guides 6, 7 partially sectioned in the longitudinal direction, Figure 3 shows a partial cross section through a sliding guide 6, 7. As can be seen, the lower sliding element 17 has a groove 18 that extends in its longitudinal direction and has an L-shaped cross-section, and the upper sliding element 16 has a corresponding projection 19 that extends in its longitudinal direction and likewise has a L-shaped cross-section. Figure 3 shows only one section of the slide guide 6, 7, and a corresponding L-shaped groove 18 as well as a corresponding L-shaped projection 19, which are merely mirror-inverted, are located at the facing left side. In the mounted state, the two projections 19 are inserted into the two grooves 18 with a corresponding shape, so that a displacement of the upper sliding element 16 with respect to the lower sliding element 17 in the longitudinal direction is possible, but the sliding elements 16, 17 cannot be lifted off from each other due to the L-shape. It is to be stressed that the L-shaped projections 19 and corresponding grooves 18 are only one possible example for an arrangement which facilitates this, and that alternatively designed arrangements are equally possible.

Each of the two sliding guides 6, 7 has end position stops that are formed by rubber stoppers, which are not shown in the Figures and which delimit the sliding path in the retracted as well as in the extended end position.

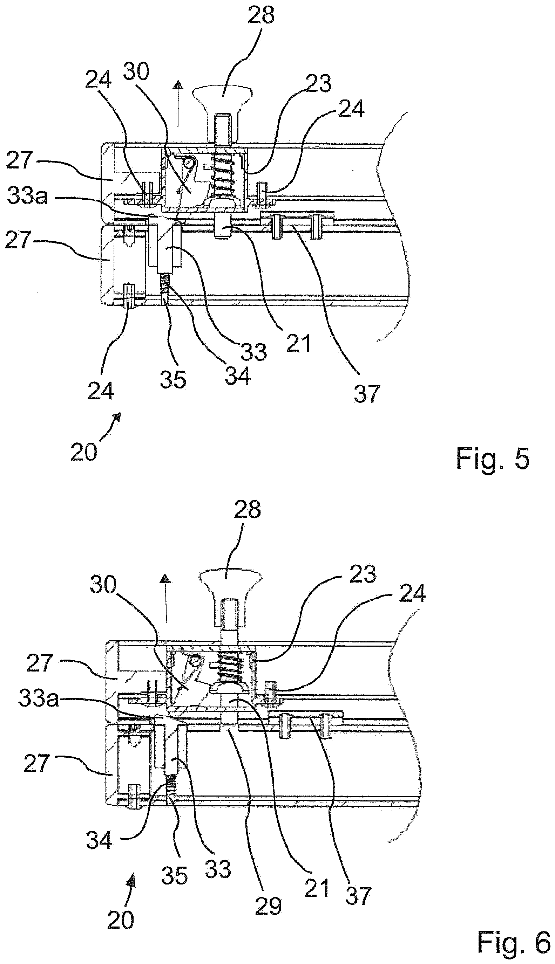

Further, each of the two sliding guides 6, 7 comprises a locking device 20 by means of which the respective sliding guide 6, 7 can be locked in the retracted end position (cf. Figure 1). The design of the locking devices 20 can in particular be seen in Figures 5 to 13, which contain enlarged sectional views.

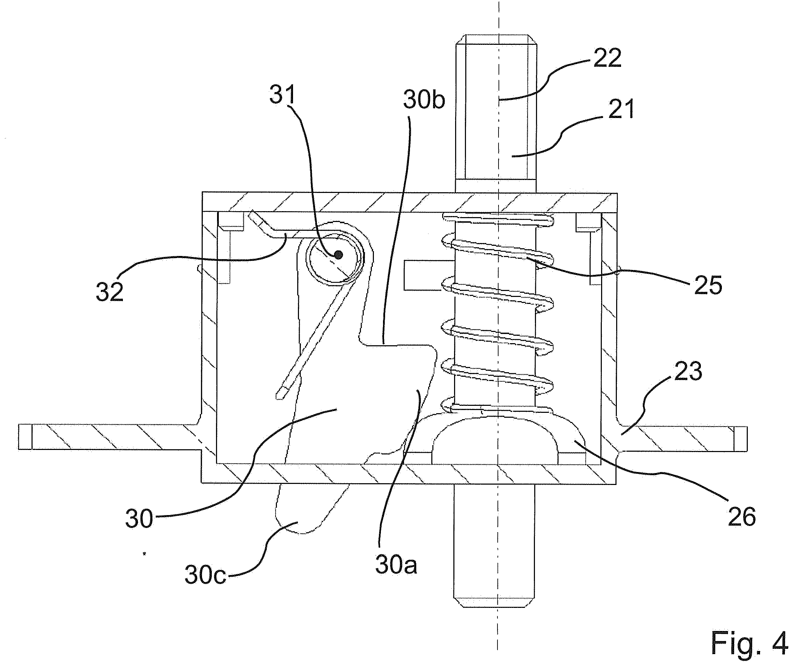

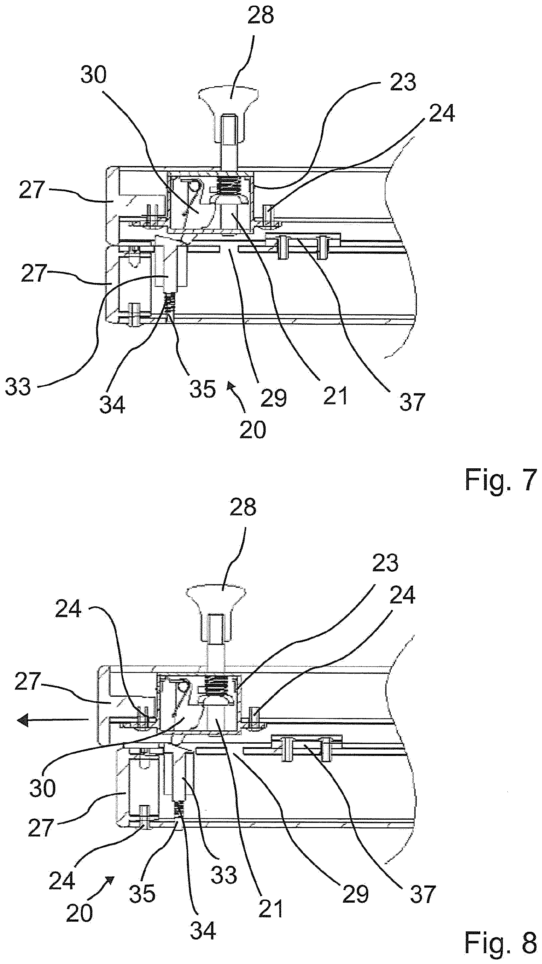

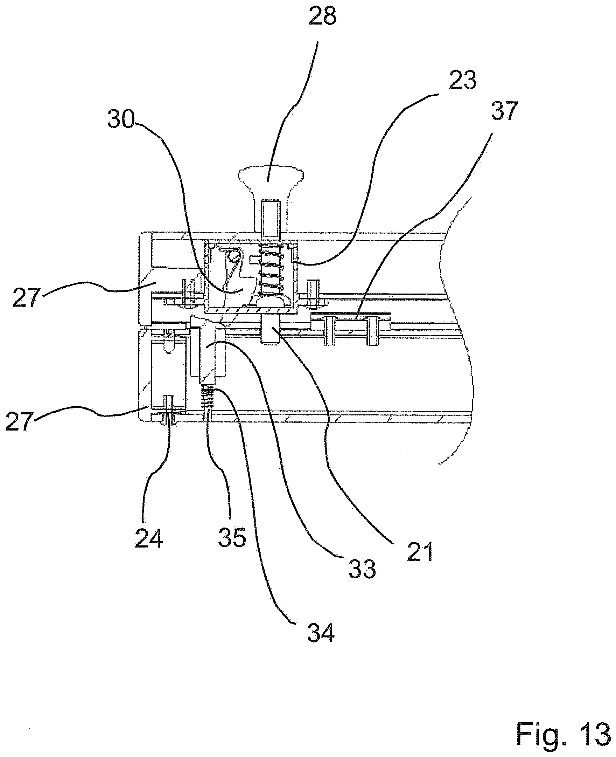

Each of the two locking devices 20, which are constructed identically in the two identically constructed sliding guides 6, 7, comprises a locking bolt 21 that is held at the upper one of the two sliding elements 16 so as to be movable between a blocked position and a release position. In concrete terms, the locking bolt 21 is mounted at the upper sliding element 16 so as to be movable along a locking axis 22 (cf. Figure 4), wherein it extends through two aligned bores that are provided in an insert element 23 that is screwed into a recess in the upper sliding element 16 by means of two screws 24. As can be seen in Figure 4, the two aligned bores are provided at the facing walls of the insert element 23. Their inner circumference is adjusted to the outer circumference of the locking bolt 21 with play, so that it can slide along the locking axis 22 through the bores. Figures 5 and 13 show the locking bolt 21 in the blocked position. Figures 7 to 10 show it in the release position, and Figures 6, 11 and 12 respectively in intermediate positions. The locking bolt 21 is pre-loaded in the direction of the blocked position by means of a coil spring 25 that can in particular be seen in the enlarged rendering of Figure 4. At the locking bolt 21, a ring 26 enclosing the same is affixed, which in the blocked position (cf. Figures 4 and 5) rests at the top side of the lower wall of the insert element 23, so that the locking bolt 21 cannot be moved further downwards. A movement upwards is also restricted by the ring 26 and the coil spring 25.

It is to be understood that the screw 24, which is located on the left in Figures 4 to 13 and by means of which the insert element 23 is affixed, at the same time affixes an end cap 27 made of a plastic material that closes the upper sliding element 16 at the end face side (cf. Figures 5 to 13). The lower sliding element 17 is also closed by an end cap 27 made of a plastic material that is affixed by means of further screws 24 or plugs.

At the free end of the locking bolts 21 that points upwards in the Figures a handle 28 is fixated, which facilitates a convenient release of the locking by a user.

In the blocked position, the locking bolt 21 meshes into a locking recess 29 that is provided in the lower sliding element 17 in the form of a through bore, whereby it is avoided that the upper sliding element 16 can be displaced against the lower sliding element 17. The locking recess 29 can be seen particularly clearly in Figures 7 to 11.

What is further provided is a mechanism which is automatically activated as the locking bolt 21 of the respective locking device 20 is transferred by a user from the blocked position into the release position, holding the locking bolt 21 in the release position, so that the upper sliding element 16 can be freely displaced against the lower sliding element 17, and which, when the sliding element 16 is moved from a completely or partially extended position into the retracted end position, automatically releases the locking bolt 21 shortly before or upon reaching the retracted end position, so that the locking bolt 21 is moved into the blocked position, and the respective sliding guide 6, 7 is automatically locked.

In the shown exemplary embodiment, the mechanism comprises a holding element 30 that is held at the insert element 23 in a movable manner. In concrete terms, it is held at the insert element 23 so as to be pivotable about a pivot axis 31, which extends perpendicular to the drawing plane, between a holding position and a free-running position (cf. in particular Figure 4), and is pre-loaded in the direction of the holding position by means of a torsion spring 32. Figures 7 to 10 show the holding element 30 in the holding position. It is to be understood that the holding element 30 is in that position also in Figures 4, 5 and 13, but does not hold the locking bolt 21 that is in the blocked position.

The holding element 30 has a tapered section 30a which tapers into the direction of the lower sliding element 17 and on one side has an arcuate outer contour, a step- or hook-shaped holding section 30b as well as an end section 30c that projects downwards from the insert element 23. In the lower wall, the insert element 23 has an opening through which the end section 30c of the holding element 30 can project in the downwards direction.

The tapered section 30a of the holding element 30 is designed in such a manner and the arrangement is realized in such a manner that the ring 26 attached at the locking bolt 21 is engaged with the tapered section 30a and is moved along the arcuate outer contour of the section 30a when the locking bolt 21 is moved by a user from the locking position into the release position, and as a result of this the holding element 30 is pressed and pivoted from the holding position in the direction of the free-running position.

The mechanism further comprises a releasing element 33 that is held at the lower sliding element 17 so as to be movable between a retracted position and a projecting position. In Figure 8, the releasing element 33 is shown in the retracted position, otherwise in the projecting position. The releasing element 33 is pre-loaded in the direction of the projecting position by means of a coil spring 34. It has a ramp-shaped end area 33a that rises in a ramp-shaped manner in the direction of the extended end position and engages with the end area 30c of the holding element 30 when the sliding guide 6, 7 is brought from the retracted into the extended end position or vice versa, wherein the end area 30c of the holding element 30 engages with the ramp-shaped end area 33a of the releasing element 33 shortly before reaching the retracted end position. In the projecting position, the ramp-shaped end area 33a projects in the direction of the upper sliding element 16 to beyond the upper edge of the lower sliding element 17.

On the bottom side, the releasing element 33 has a bore hole, which cannot be seen in Figures, and is plugged onto a holding pin 35 that is fixated at the lower sliding element 17. The coil spring 34 extends about the holding pin 35 for pre-loading the releasing element 33 in the projecting position.

Here, the arrangement is realized in such a manner that, when the sliding guide 6,7 is brought into the extended end position, the engaging end area 30c of the holding element 30 is moved in the rising direction over the ramp-shaped end area 33a of the releasing element 33 (right to left in the Figures), and the holding element 30 presses the releasing element 33 in the retracted position. But if by contrast the sliding guide 6,7 is brought (back) to the retracted end position, the engaging end area 30c of the holding element 30 abuts the higher side of the ramp-shaped end section 33a and in this way is moved from the holding position into the free-running position, whereby the locking bolt 21 is automatically released and the respective sliding guide 6, 7 is automatically locked.

In the mounted state, the bicycle carrier 1 is attached at the draw bar of a trailer caravan. In concrete terms, the two tubular base elements 3, 4 are respectively affixed at the side rails of the draw bar by means of two U-shaped clamps 36 (cf. Figure 1). In the state mounted according to the intended use, the sliding guides 6, 7 extend horizontally, so that the carrying device 5 can be displaced horizontally by means of the sliding guides 6, 7. Two bicycles can be attached at the carrying device 5, wherein one wheel of a bicycle is arranged in each of the four support rails 9. When the bicycle carrier 1 is mounted and two bicycles are attached at the same, a stowage space in the front area of the trailer caravan is still conveniently accessible. If a user wishes to take something out of the stowage space and/or to place something inside it, they in particular successively release the two locking devices 20 at the two sliding guides 6, 7, and then can move the carrying device 5 in a very convenient manner, practically without using force, into the extended end position and access the stowage space.

The locking bolt 21 is automatically held in the release position by means of the mechanism provided for this purpose, and ensures automatic locking after use. This will be explained in more detail by referring to the Figures 5 to 13, each partially showing one of the sliding guides 6, 7.

Figure 5 shows the sliding guide 6, 7 in the retracted end position in the locked state, when the locking bolt 21 is in the blocked position and its lower end area meshes with the locking recess 29.

To be able to move the carrying device 5 away from the trailer caravan, the user in particular successively grips the handle 28 of the respective arresting device 20 and moves the respective locking bolt 21 upwards into the release position (Figure 7). This is indicated by corresponding arrows in the Figures. When the locking bolt 21 is moved from the locking into the release position, the ring 26 engages with the tapered section 30a of the holding element 30, is moved along it, and as a result the holding element 30 is pressed or pivoted from the holding position in the direction of the free-running position. This is indicated in Figure 6, which shows a position of the locking bolt 21 between the locking and the release position. The holding element 30 is clearly pivoted to the left as compared to Figures 5 and 7. Shortly before the locking bolt 21 reaches the release position, the holding element 30 can pivot back into the holding position due to the step- or hook-shaped holding section 30b that connects to the tapered section 30a, and the holding section 30b engages under the ring 26 and in this way holds the locking bolt 21 in the release position (Figure 7). In that case, a section of the bottom side of the ring 26 rests on the holding section 30b on the top side.

The user can release the handle 28, and the upper sliding element 16 of the respective sliding guide 6, 7 and thus the carrying device 5 attached thereat can be displaced freely with respect to the lower sliding elements 17 and thus the base 2. At that, glide elements 37 made of plastic material provided at the top side of the lower sliding element 17 ensure a good sliding motion.

If the user moves the carrying device 5 from the retracted end position in the direction of the extended end position, which is indicated in Figure 8 by a corresponding arrow, the projecting end section 30c of the holding element 30 passes the releasing element 33, in concrete terms it is moved across its ramp-shaped end area 33a in rising direction. Due to the ramp shape a force component that is orthogonal with respect to the displacement direction results, and the releasing element 33 is pressed downwards. Figure 8 shows the upper sliding element 16 in a slightly extended position, when the end section 30c of the holding element 30 engages with the ramp-shaped area 33a of the releasing element 33 and the releasing element 33 is pressed into an almost completely retracted position. Due to the ramp shape that is rising in this direction, the releasing element 33 can be passed by the holding element 30 without much resistance and without the position of the holding element 30 being altered.

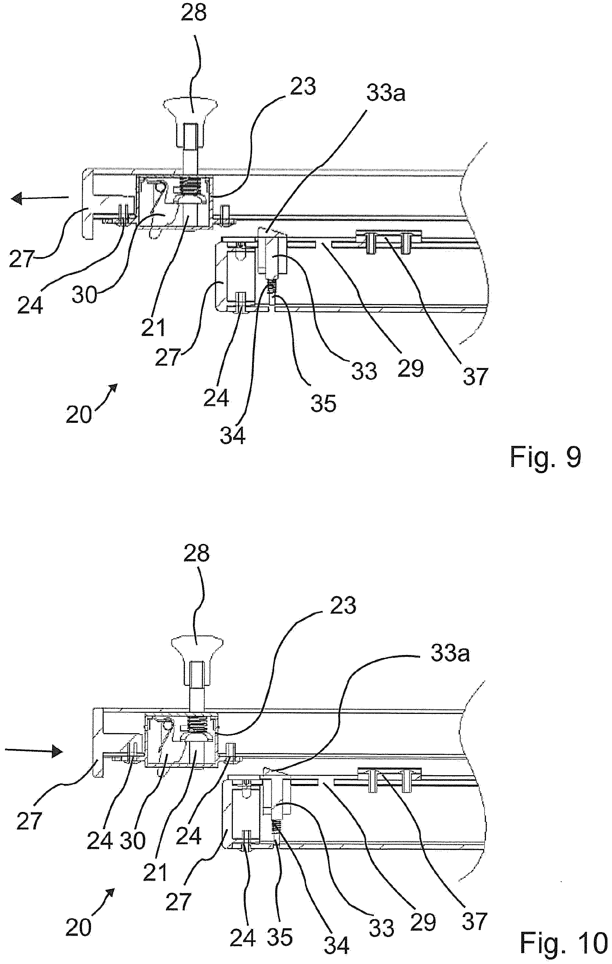

If the upper sliding element 16 is pushed further in the direction of the extended end position (towards the left in the Figures), the end section 30c of the holding element 30 and the ramp-shaped end area 33a of the releasing element 33 engages again, and the releasing element 33 is automatically moved back into the projecting position because of the coil spring 34 (cf. Figure 9).

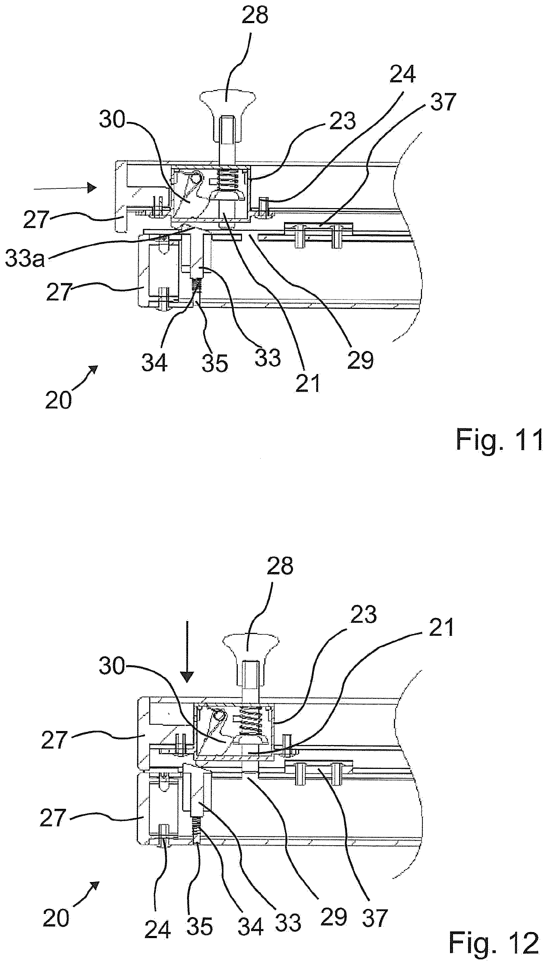

When, following access to the stowage space, the carrying device 5 is moved back into the retracted end position, which is indicated by corresponding arrows in Figures 10 and 11, the projecting end section 30c of the holding element 30 abuts against the higher side of the ramp-shaped area 33a of the releasing element 33, which is located left in the Figure, shortly before reaching the retracted end position, and the holding element is forced out of the holding position into the free-running position (cf. Figure 11). When the holding element 30 is in the free-running position, the ring 26 and thus the locking bolt 21 is no longer held and is moved downwards by the coil spring 25, and, upon reaching the retracted end position, the locking bolt 21 comes into the blocked position in which its lower end area engages with the locking recess 29 in the lower sliding element 17. Displacement of the upper sliding elements 16 and thus the carrying device 5 is then no longer possible. It is to be understood that the processes that have been described above for one locking device 20 equally apply to the arresting devices 20 of both sliding guides 6, 7 due to their identical construction. It is also to be understood that in principle it can be sufficient if only one of multiple provided sliding guides 6, 7 is provided with a locking device 20.

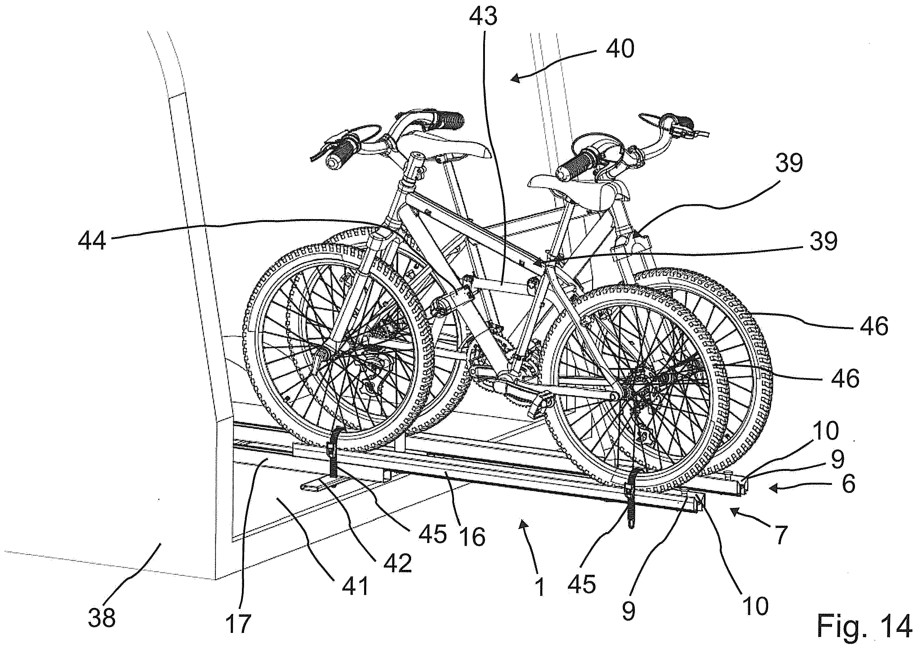

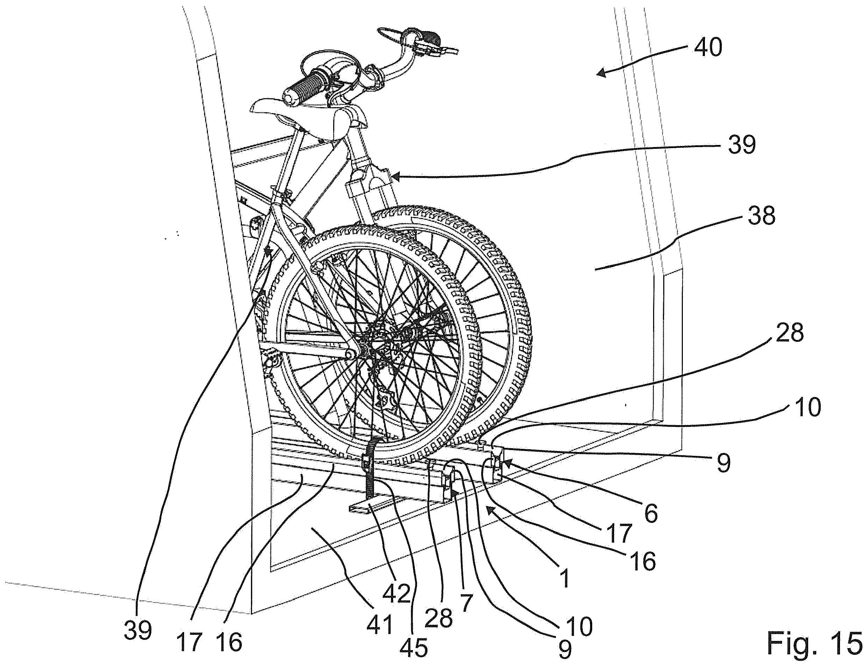

Figure 14 and 15 show a second exemplary embodiment of a load carrier according to the present invention, which is also embodied as a bike carrier 1 and which differs from the first embodiment in that it is embodied as a carrier to be positioned in the interior of a vehicle. Identical components are marked with identical reference signs. In Figures 14 and 15 the vehicle, which is embodied as an estate car 38 is only shown schematically and partially. The bicycle carrier 1 together with two bikes 39 attached thereto is positioned in the luggage compartment 40 of the vehicle 38.

The bicycle carrier 1 - in complete analogy to the first embodiment - comprises a base 2 that is to be attached to the vehicle 38, which, for the second embodiment, is not to be attached to the drawbar of a vehicle but to the floor 41 in the vehicle's interior. The base 2 is formed by two fixing rails 42 in the form of flat square tubes, only one of which can be seen in the figures. A second identical fixing rail 42 is arranged further inside the vehicle interior and extends at least substantially parallel to the first fixing rail 42.

The base 2 is connected to a carrying device 5 of the bicycle carrier 1 via two sliding guides 6, 7 of identical construction. The carrying device 5 of the second embodiment comprises two spaced-apart support rails 9, each of which has a U-shaped groove 10 at the top for receiving the two wheels of one bicycle 39 and a mounting bracket 43 disposed between the two support rails 9 to which the bikes 39 are fastened with clamping elements 44. The support rails 9 of the second embodiment do not extend orthogonal to the sliding guides 6, 7, as is the case for the first embodiment, but at least substantially parallel to them. A total of four fastening straps 45 are furthermore provided for fastening the bicycles 39 to the two support rails 9, each fixing one wheel 46 to one of the support rails 9.

The two sliding guides 6, 7 are almost identical to the sliding guides 6, 7 of the first embodiment, each with an upper sliding element 16 and a lower sliding element 17, which is why reference is made to the detailed description above in connection with the first embodiment and in particular Figures 2 to 13. The only difference of the sliding guides 6, 7 of the second embodiment is that to the upper sliding element 16 of each sliding guide 6, 7 one of the two support rails 9 is integrally formed, in detail at the top of the respective upper sliding element 16 extending below the respective support rail 9. In the shown second embodiment the carrying device 5 does not comprise a support frame 8 or U-shaped tubular profiles 14 like the first embodiment, but it is of course possible that alternatively to the shown embodiment a support frame 8 and/or U-shaped tubular profiles 14 are additionally provided.

The two sliding guides 6, 7 of the second embodiment are also spaced apart and extend at least substantially parallel to each other and their two sliding elements 16, 17 are linearly displaceable mounted at each other, which, like for the first embodiment, is achieved with an embodiment with L-shaped grooves 18 in cross section and corresponding L-shaped projections 19 in cross section (cf. Figure 3).

The first retracted end position of the carrying device 5 is shown in Figure 15 and the second extended end position in Figure 14.

Each of the two lower sliding elements 17 is with its underside fastened to both of the spaced fixing rails 42. The sliding guides 6, 7 and the fixing rails 42 extend essentially orthogonally to each other, as can be seen in the figures.

Also for the second embodiment it holds that each of the sliding guides 6, 7 comprises a locking device 20 of which in figures 14 and 15, which only show exterior views, only the handles 28 via which a user can comfortably move the locking bolts 21 (cf. Figures 3 to 15) into the release position can be seen. The two locking devices 20 of the second embodiment are designed exactly the same as those of the first embodiment, which is why reference is again made to the previous description, in particular of Figures 2 to 13.

Since for the load carriers embodied according to the invention, thanks to the automatism of the locking devices 20 when the retracted end position is reached thanks to the automatism, a locking of the sliding guides 6, 7 always occurs automatically and cannot be forgotten, the use of the load carrier 1 according to the invention ensures not only a particularly high level of convenience but also a particularly high degree of safety. Also, due to the fact that the bicycles 39 stay in a vertical position at all times even if the carrying device 5 is displaced and are never tilted in the direction of the trailer caravan or other vehicle 38, possible damage to the vehicle is reliably prevented in a particularly reliable manner.

## Claims

1. A load carrier (1), in particular a bicycle carrier, for a vehicle, with a base (2) that is to be attached at the vehicle and a carrying device (5) that is held at the base (2) and has at least one reception area for a load, in particular a bicycle, wherein the base (2) and the carrying device (5) are connected to each other via at least one sliding guide (6, 7) that provides a sliding path and that is embodied and arranged in such a manner that, by means of the at least one sliding guide (6, 7), the carrying device (5) can be displaced relative to the base (2) from a first retracted end position into a second extended end position in particular linearly, wherein the at least one sliding guide (6, 7) comprises two sliding elements (16, 17) that are mounted at each other in particular in a linearly displaceable manner, and that a locking device (20) is provided by means of which the at least one sliding guide (6, 7) can be locked in the retracted end position, **characterized by** the locking device (20) comprising at least one locking bolt (21) that is held at one of the two sliding elements (16, 17) so as to be movable between a blocked position and a release position, and by the locking bolt (21) being pre-loaded in the direction of the blocked position, wherein a mechanism is provided which is automatically activated as the locking bolt (21) is being transferred from the blocked position into the release position and which holds the locking bolt (21) in the release position, so that the sliding elements (16, 17) can be freely displaced with respect to one another, and which, as the carrying device (5) is being moved into the first retracted end position, automatically releases the locking bolt (21) either shortly before or upon reaching the retracted end position, so that the locking bolt (21) is moved into the blocking position and locking takes place.

2. Load carrier (1) according to claim 1, **characterized in that** the locking device (20) comprises a recess (29) which is provided in the other one (17) of the two sliding elements (16, 17) and into which an end area of the locking bolt (21) engages when it is in the blocked position.

3. Load carrier (1) according to claim 1 or 2, **characterized in that** a holding element (30) is provided that has a holding section (30b) which automatically engages with a projection provided at the locking bolt (21), when the locking bolt (21) is transferred from the blocked position into the release position, wherein the projection preferably is formed by a retaining ring (26) that encloses the locking bolt (21), and/or the holding element (30) is held at the one sliding element (16) so as to be moveable between a holding position and a free-running position, in particular so as to be pivotable about a pivot axis, and particularly preferably is pre-loaded in the direction of the holding position.

4. Load carrier (1) according to claim 3, **characterized in that** the holding element (30) has a step-or hook-shaped holding section (30b) wherein, when the locking bolt (21) is in the release position and the holding element (30) is in the holding position, particularly preferably a bottom side of the projection (26) provided at the locking bolt (21) rests on a top side of the holding section (30b), and/or **in that** the holding element (30) has a tapered section (30a), which preferably tapers into the direction of the other sliding element (17), wherein the arrangement preferably is realized in such a manner that the projection (26) provided at the locking bolt (21) is engaged with and moved along the tapered section (30a) when the locking bolt (21) is transferred from the blocked position into the release position.

5. Load carrier (1) according to one of the foregoing claims, **characterized in that** the locking bolt (21) and/or the holding element (30) are held so as to be movable at an insert element (23) inserted into the sliding element (16), wherein the insert element (23) is preferably formed as an at least substantially cuboid hollow body, and/or has two aligned bore holes through which the locking bolt (21) extends.

6. Load carrier (1) according to one of the foregoing claims, **characterized in that** a releasing element (33) is provided that is held at the other sliding element (17) so as to be movable between a retracted position and a projecting position, wherein the releasing element (33) is preferably pre-loaded in the direction of the projecting position, and in particular has a ramp-shaped end area (33a) which preferably rises in a ramp-shaped manner in the direction of the extended end position and engages with an end area (30c) of the holding element (30) when the carrying device (5) is brought from a retracted position into the extended end position, or vice versa, wherein the end area (30c) of the holding element (30) in particular engages with the ramp-shaped end area (33a) of the releasing element (33) shortly before or upon reaching the retracted end position, and/or the ramp-shaped end area (33a) of the releasing element (33) protrudes in the direction of the one sliding element (16) to beyond an edge of the other sliding element (17) in the projecting position.

7. Load carrier (1) according to claim 6, **characterized in that** the arrangement is such that, when the carrying device (5) is brought into the second extended end position, the engaging end area (30c) of the holding element (30) is moved in the ascending direction across the ramp-shaped end area (33a) of the releasing element (33) and presses the releasing element (33) into the retracted position, and/or that, when the carrying device (5) is brought into the first retracted end position, the engaging end area (30c) of the holding element (30) abuts against the higher side of the ramp-shaped end section (33a) and is thus moved from the holding position into the free-running position, whereby the locking bolt (21) is automatically released.

8. Load carrier (1) according to one of the foregoing claims, **characterized in that** the two sliding elements (16, 17) of the at least one sliding guide (6, 7) are mounted against each other so as to be displaceable in a linear manner along a displacement axis, and the locking bolt (21) is held at the one sliding element (16) so as to be movable along a locking axis (22) that is oriented at least substantially perpendicular to the displacement axis.

9. Load carrier (1) according to one of the foregoing claims, **characterized in that** the sliding path is restricted by at least one end position stop at least in the extended end position, preferably being restricted by end position stops in both end position, and/or **in that** one sliding element (17) of the at least one sliding guide (6, 7) is attached at the base (2) and the other sliding element (16) of the at least one sliding guide (6, 7) is attached at the carrying device (5) or formed integrally therewith.

10. Load carrier (1) according to one of the foregoing claims, **characterized in that** the base (2) and the carrying device (5) are connected to each other by means of at least two sliding guides (6, 7) that are arranged at a distance from each other and preferably extend at least substantially in parallel to each other, and preferably one locking device (20) is assigned to each sliding guide (6, 7).

11. Load carrier (1) according to one of the foregoing claims, **characterized in that** the base (2) and the carrying device (5) are connected to each other by means of exactly two sliding guides (6, 7), wherein the base (2) preferably comprises at least two rod-shaped base elements (3, 4) that extend at least substantially in parallel to each other and preferably have a rounded or quadrangular cross-section, and of each base element (3, 4) one axial end is attached at the one sliding guide (6, 7) and the respectively other axial end is attached at the other sliding guide (6, 7).

12. Load carrier (1) according to one of the foregoing claims, **characterized in that** the carrying device (5) comprises at least one elongated support rail (9) that, at the top side, forms an in particular U-shaped or V-shaped groove (10) for receiving at least one wheel of a bicycle, the carrying device (5) preferably comprising at least one pair of two elongated support rails (9) which are arranged on a common axis and at a distance from each other in the axial direction, preferably of at least 20 cm, particularly preferably of at least 30 cm.

13. Load carrier (1) according to claim 12, **characterized in that** at least one support rail (9) extends at least substantially parallel to the at least one sliding guide (6, 7) and preferably is integrally formed to one of the sliding elements (16, 17) of the at least one sliding guide (6, 7), in particular forms one side of one of the two sliding elements (16, 17).

14. Load carrier (1) according to one of the foregoing claims, **characterized in that** carrying device (5) has a basic element which has a recess that is open towards the direction of the extended end position and serves for receiving an appliance of the vehicle in the extended end position of the carrying device (5), wherein the basic element is in particular formed as a B-shaped or double-S-shaped tubular profile.

15. Load carrier (1) according to one of the foregoing claims, **characterized in that** the arrangement is realized in such a manner that, when mounted according to the intended use, the carrying device (5) is horizontally movable.

## Patentansprüche

1. Lastenträger (1), insbesondere Fahrradträger, für ein Fahrzeug, mit einer an dem Fahrzeug zu befestigenden Basis (2) und einer an der Basis (2) gehaltenen Trageinrichtung (5), die wenigstens eine Aufnahme für eine Last, insbesondere ein Fahrrad aufweist,
wobei die Basis (2) und die Trageinrichtung (5) über wenigstens eine einen Schiebeweg bereitstellende Schiebeführung (6, 7), die derart ausgebildet und angeordnet ist, dass die Trageinrichtung (5) mittels dieser relativ zu der Basis (2) von einer ersten eingefahrenen Endstellung in eine zweite ausgefahrene Endstellung insbesondere linear verschieblich ist, miteinander verbunden sind,
wobei die wenigstens eine Schiebeführung (6, 7) zwei Schiebeelemente (16, 17) umfasst, die insbesondere linear verschieblich aneinander gelagert sind, und eine Arretiereinrichtung (20) vorgesehen ist, mittels derer die wenigstens eine Schiebeführung (6, 7) in der eingefahrenen Endstellung arretierbar ist,
**dadurch gekennzeichnet, dass** die Arretiereinrichtung (20) wenigstens einen Arretierbolzen (21), der an dem einen (16) der beiden Schiebelemente (16, 17) zwischen einer Sperrstellung und einer Freigabestellung bewegbar gehalten ist, umfasst, und der Arretierbolzen (21) in Richtung der Sperrstellung vorgespannt ist,
wobei ein Mechanismus vorgesehen ist, der bei Überführung des Arretierbolzens (21) aus der Sperrstellung in die Freigabestellung automatisch aktiviert und den Arretierbolzen (21) in der Freigabestellung hält, so dass die Schiebeelemente (16, 17) frei gegeneinander verschoben werden können, und der, wenn die Trageinrichtung (5) in die erste eingefahrene Endstellung bewegt wird, kurz vor oder bei Erreichen der eingefahrenen Endstellung den Arretierbolzen (21) automatisch freigibt, so dass dieser in die Sperrlage bewegt und automatisch arretiert wird.

2. Lastenträger (1) nach Anspruch 1, **dadurch gekennzeichnet, dass** die Arretiereinrichtung (20) eine in dem anderen der beiden Schiebeelemente (17) vorgesehene Ausnehmung (29) umfasst, in welche ein Endbereich des Arretierbolzens (21) eingreift, wenn sich dieser in der Sperrstellung befindet.

3. Lastenträger (1) nach Anspruch 1 oder 2, **dadurch gekennzeichnet, dass** ein Halteelement (30) vorgesehen ist, das einen Halteabschnitt umfasst, der automatisch in Eingriff mit einem an dem Arretierbolzen (21) vorgesehenen Vorsprung kommt, wenn der Arretierbolzen (21) aus der Sperrstellung in die Freigabestellung überführt wird, wobei der Vorsprung bevorzugt durch einen den Arretierbolzen (21) einfassenden Haltering (26) geformt ist, und/oder das Halteelement (30) bevorzugt zwischen einer Haltestellung und einer Freilassstellung bewegbar, insbesondere um eine Schwenkachse (31) schwenkbar an dem einen Schiebeelement (16) gehalten und besonders bevorzugt in Richtung der Haltestellung vorgespannt ist.

4. Lastenträger (1) nach Anspruch 3, **dadurch gekennzeichnet, dass** das Halteelement (30) einen stufen- oder hakenförmigen Halteabschnitt (30b) aufweist,
wobei besonders bevorzugt, wenn sich der Arretierbolzen (21) in der Freigabestellung und das Halteelement (30) in der Haltestellung befindet, eine Unterseite des an dem Arretierbolzen (21) vorgesehenen Vorsprungs (26) auf einer Oberseite des Halteabschnitts (30b) aufliegt,
und/oder dass das Halteelement (30) einen sich bevorzugt in Richtung des anderen Schiebeelementes (17) verjüngende Abschnitt (30a) umfasst,
wobei die Anordnung bevorzugt derart getroffen ist, dass der an dem Arretierbolzen (21) vorgesehene Vorsprung (26) mit dem sich verjüngenden Abschnitt (30a) in Eingriff ist und sich entlang diesem bewegt, wenn der Arretierbolzen (21) von der Sperrstellung in die Freigabestellung überführt wird.

5. Lastenträger (1) nach einem der vorhergehenden Ansprüche, **dadurch gekennzeichnet, dass** der Arretierbolzen (21) und/oder das Halteelement (30) an einem in das eine Schiebeelement (16) eingesetzten Einsatzelement (23) bewegbar gehalten sind, wobei das Einsatzelement (23) bevorzugt als zumindest im Wesentlichen quaderförmiger Hohlkörper ausgebildet ist, und/oder zwei fluchtende Bohrungen aufweist, durch welche sich der Arretierbolzen (21) erstreckt.

6. Lastenträger (1) nach einem der vorhergehenden Ansprüche, **dadurch gekennzeichnet, dass** an dem anderen Schiebeelement (17) ein Freigabeelement (33) zwischen einer eingezogenen und einer vorstehenden Stellung bevorzugt linear bewegbar gehalten ist,
wobei das Freigabeelement (33) bevorzugt in Richtung der vorstehenden Stellung vorgespannt ist,
und das Freigabeelement (33) insbesondere einen rampenförmigen Endbereich (33a) aufweist, der bevorzugt in Richtung der ausgefahrenen Endstellung rampenförmig ansteigt und mit einem Endbereich (30c) des Halteelementes (30) in Eingriff kommt, wenn die Trageinrichtung (5) aus der eingefahrenen in die ausgefahrene Endstellung oder umgekehrt gebracht wird,
wobei der Endbereich (30c) des Halteelementes (30) bevorzugt kurz vor oder bei Erreichen der eingefahrenen Endstellung mit dem rampenförmigen Endbereich (33a) des Freigabeelementes (33) in Eingriff kommt, und/oder der rampenförmige Endbereich (33a) des Freigabeelementes (33) in der vorstehenden Stellung in Richtung des einen Schiebeelementes (16) über einen Rand des anderen Schiebeelementes (17) vorsteht.

7. Lastenträger (1) nach Anspruch 6, **dadurch gekennzeichnet, dass** die Anordnung derart getroffen ist, dass der in Eingriff kommende Endbereich (30c) des Halteelementes (30), wenn die Trageinrichtung (5) in die ausgefahrene Endstellung gebracht wird, in ansteigender Richtung über den rampenförmigen Endbereich (33a) des Freigabeelementes (33) bewegt wird, und das Freigabeelement (33) in die eingezogene Stellung drückt, und/oder dass der in Eingriff kommende Endbereich (30c) des Halteelementes (30), wenn die Trageinrichtung (5) in die eingefahrene Endstellung gebracht wird, gegen die höhere Seite des rampenförmigen Endabschnitts (33a) stößt und hierdurch aus der Haltestellung in die Freilassstellung bewegt wird, wodurch der Arretierbolzen (21) automatisch freigegeben wird.

8. Lastenträger (1) nach einem der vorhergehenden Ansprüche, **dadurch gekennzeichnet, dass** die beiden Schiebelemente (16, 17) der wenigstens einen Schiebeführung (6, 7) entlang einer Verschiebeachse linear verschieblich aneinander gelagert sind, und der Arretierbolzen (21) entlang einer Arretierachse (22) bewegbar an dem einen Schiebeelement (16) gehalten ist, welche zumindest im Wesentlich senkrecht zu der Verschiebeachse orientiert ist.

9. Lastenträger (1) nach einem der vorhergehenden Ansprüche, **dadurch gekennzeichnet, dass** der Schiebeweg zumindest in der ausgefahrenen Endstellung durch wenigstens einen Endstellungsanschlag begrenzt ist, bevorzugt in den beiden Endstellungen durch Endstellungsanschläge begrenzt ist, und/oder dass ein Schiebelement (17) der wenigstens einen Schiebeführung (6, 7) an der Basis (1) und das andere Schiebeelement (16) der wenigstens einen Schiebeführung (6, 7) an der Trageinrichtung (5) befestigt oder integral damit ausgebildet ist.

10. Lastenträger (1) nach einem der vorhergehenden Ansprüche, **dadurch gekennzeichnet, dass** die Basis (2) und die Trageinrichtung (5) über wenigstens zwei voneinander beabstandet angeordnete, sich bevorzugt zumindest im Wesentlichen parallel zueinander erstreckende Schiebeführungen (6, 7) miteinander verbunden sind, und bevorzugt jeder Schiebeführung (6, 7) eine Arretiereinrichtung (20) zugeordnet ist.

11. Lastenträger (1) nach einem der vorhergehenden Ansprüche, **dadurch gekennzeichnet, dass** die Basis (2) und die Trageinrichtung (5) über genau zwei Schiebeführungen (6, 7) miteinander verbunden sind, und bevorzugt die Basis (2) wenigstens zwei sich zumindest im Wesentlich parallel zueinander erstreckende rohr- oder stangenförmige Basiselemente (3, 4) mit insbesondere rundem oder viereckigem Querschnitt umfasst, und von jedem Basiselement (3, 4) ein axiales Ende an der einen Schiebeführung (6, 7) und das jeweils andere axiale Ende an der anderen Schiebeführung (6, 7) befestigt ist.

12. Lastenträger (1) nach einem der vorhergehenden Ansprüche, **dadurch gekennzeichnet, dass** die Trageinrichtung (5) wenigstens eine längliche Tragschiene (9), die obenseitig eine insbesondere U- oder V-förmige Nut (10) für die Aufnahme wenigstens eines Rades eines Fahrrades bilden, umfasst, die Trageinrichtung (5) bevorzugt wenigstens ein Paar von zwei länglichen Tragschienen (9) umfasst, die auf einer gemeinsamen Achse und in axialer Richtung beabstandet zueinander angeordnet sind, bevorzugt um wenigstens 20 cm, besonders bevorzugt um wenigstens 30 cm.

13. Lastenträger (1) nach Anspruch 12, **dadurch gekennzeichnet, dass** sich wenigstens eine Tragschiene (9) zumindest im Wesentlichen parallel zu der wenigstens einen Schiebeführung (6, 7) erstreckt und bevorzugt integral mit einem der Schiebeelemente (16, 17) der wenigstens einen Schiebeführung (6, 7) ausgebildet ist, bevorzugt eine Seite von einem der beiden Schiebeelemente (16, 17) bildet.

14. Lastenträger (1) nach einem der vorhergehenden, **dadurch gekennzeichnet, dass** die Trageinrichtung (5) ein Grundelement aufweist, welches eine in Richtung der ausgefahrenen Endstellung hin offene Ausnehmung zur Aufnahme einer Einrichtung des Fahrzeugs in der ausgefahrenen Endstellung der Trageinrichtung (5) aufweist, wobei das Grundelement insbesondere als B- oder Doppel-S-förmiges Rohrprofil ausgebildet ist.

15. Lastenträger (1) nach einem der vorhergehenden Ansprüche, **dadurch gekennzeichnet, dass** die Anordnung derart getroffen ist, dass die Trageinrichtung (5) bei bestimmungsgemäßer Montage horizontal beweglich ist.

## Revendications

1. Porte-charge (1), en particulier porte-bicyclette, pour un véhicule, avec une base (2) à fixer sur le véhicule et un dispositif de support (5) qui est maintenu sur la base (2) et qui présente au moins un logement pour une charge, en particulier une bicyclette, la base (2) et le dispositif de support (5) étant reliés au moyen d'au moins un guide coulissant (6, 7) qui présente un trajet de coulissement et qui est conçu et disposé de telle sorte que le dispositif de support (5) peut être déplacé en particulier linéairement par rapport à la base (2) au moyen du guide coulissant (6, 7) d'une première position d'extrémité rétractée dans une deuxième position d'extrémité déployée, le au moins un guide coulissant (6, 7) comprenant deux éléments coulissants (16, 17) qui sont montés l'un sur l'autre, en particulier de manière à pouvoir être déplacés linéairement, et un dispositif de verrouillage (20) étant prévu, au moyen duquel le au moins un guide coulissant (6, 7) peut être verrouillé dans la position d'extrémité rétractée, **caractérisé en ce que** le dispositif de verrouillage (20) comprend au moins une goupille de verrouillage (21), qui est maintenue sur l'un (16) des deux éléments coulissants (16, 17) de manière à pouvoir être déplacée entre une position de verrouillage et une position de libération, et la goupille de verrouillage (21) est précontrainte en direction de la position de verrouillage, un mécanisme étant prévu, qui s'active automatiquement lorsque la goupille de verrouillage (21) passe de la position de verrouillage à la position de libération et qui maintient la goupille de verrouillage (21) dans la position de libération de sorte que les éléments coulissants (16, 17) peuvent être déplacés librement l'un par rapport à l'autre, et qui, lorsque le dispositif de support (5) est déplacé dans la première position d'extrémité rétractée, libère automatiquement la goupille de verrouillage (21) peu avant ou lorsque la position d'extrémité rétractée est atteinte, de sorte que cette dernière est déplacée dans la position de verrouillage et est verrouillée automatiquement.

2. Porte-charge (1) selon la revendication 1, **caractérisé en ce que** le dispositif de verrouillage (20) comprend un évidement (29) prévu dans l'autre des deux éléments coulissants (17), dans lequel s'engage une zone d'extrémité da la goupille de verrouillage (21) lorsque celle-ci est en position de verrouillage.

3. Porte-charge (1) selon la revendication 1 ou 2, **caractérisé en ce qu'**il est prévu un élément de retenue (30) comprenant une partie de retenue qui s'engage automatiquement avec une saillie prévue sur la goupille de verrouillage (21) lorsque la goupille de verrouillage (21) est transférée de la position de verrouillage à la position de libération, la saillie étant de préférence formée par une bague de retenue (26) entourant la goupille de verrouillage (21), et/ou l'élément de retenue (30) est de préférence mobile entre une position de retenue et une position de libération, en particulier est maintenu sur un élément coulissant (16) de manière à pouvoir pivoter autour d'un axe de pivotement (31) et est de préférence particulièrement précontraint en direction de la position de retenue.

4. Porte-charge (1) selon la revendication 3, **caractérisé en ce que** l'élément de retenue (30) présente une section de retenue (30b) en forme de gradin ou de crochet, une face inférieure de la saillie (26) prévue sur la goupille de verrouillage (21) de préférence en particulier reposant sur une face supérieure de la section de retenue (30b) lorsque la goupille de verrouillage (21) est en position de libération et l'élément de retenue (30) est en position de retenue, et/ou **en ce que** l'élément de retenue (30) comprend une partie (30a) se rétrécissant de préférence en direction de l'autre élément coulissant (17), l'arrangement étant de préférence tel que la saillie (26) prévue sur la goupille de verrouillage (21) s'engage avec la partie rétrécissant (30a) et se déplace le long de celle-ci lorsque la goupille de verrouillage (21) est transférée de la position de verrouillage à la position de libération.

5. Porte-charge (1) selon l'une des revendications précédentes, **caractérisé en ce que** la goupille de verrouillage (21) et/ou l'élément de retenue (30) sont maintenus de manière mobile sur un élément d'insertion (23) inséré dans l'un des éléments coulissants (16), l'élément d'insertion (23) étant de préférence conçu comme un corps creux au moins sensiblement parallélépipédique et/ou présentant deux alésages alignés à travers lesquels s'étend la goupille de verrouillage (21).

6. Porte-charge (1) selon l'une des revendications précédentes, **caractérisé en ce qu'**un élément de déclenchement (33) est maintenu sur l'autre élément coulissant (17) de manière à pouvoir être déplacé de préférence linéairement entre une position rétractée et une position saillante, l'élément de déclenchement (33) étant de préférence précontraint en direction de la position saillante, et l'élément de déclenchement (33) présente en particulier une zone d'extrémité (33a) en forme de rampe qui monte de préférence en forme de rampe en direction de la position d'extrémité déployée et qui vient en engagement avec une zone d'extrémité (30c) de l'élément de retenue (30), lorsque le dispositif de support (5) est déplacé de la position d'extrémité rétractée à la position d'extrémité déployée ou inversement, la zone d'extrémité (30c) de l'élément de retenue (30) s'engageant de préférence dans la zone d'extrémité (33a) en forme de rampe de l'élément de déclenchement (33) peu avant ou lorsque la position d'extrémité rétractée est atteinte, et/ou la zone d'extrémité (33a) en forme de rampe de l'élément de déclenchement (33) en position saillante dépasse en direction d'un élément coulissant (16) d'un bord de l'autre élément coulissant (17).

7. Porte-charge (1) selon la revendication 6, **caractérisé en ce que** l'arrangement est tel que, lorsque le dispositif de support (5) est amené dans la position d'extrémité déployée, la zone d'extrémité engageant (30c) de l'élément de retenue (30) est déplacée vers une direction vers le haut sur la partie d'extrémité en forme de rampe (33a) de l'élément de déclenchement (33) dans la position de saillie et pousse l'élément de déclenchement (33) dans la position rétractée, et/ou **en ce que,** lorsque le dispositif de support (5) est amené dans la position d'extrémité rétractée, la zone d'extrémité engageant (30c) de l'élément de retenue (30) vient en butée contre le côté supérieur de la partie d'extrémité en forme de rampe (33a) et est ainsi déplacée de la position de retenue à la position de libération, ce qui libère automatiquement la goupille de verrouillage (21).

8. Porte-charge (1) selon l'une des revendications précédentes, **caractérisé en ce que** les deux éléments coulissants (16, 17) du au moins un guide coulissant (6, 7) sont montés l'un sur l'autre de manière à pouvoir se déplacer linéairement le long d'un axe de déplacement, et la goupille de verrouillage (21) est maintenue sur l'un des éléments coulissants (16) de manière à pouvoir se déplacer le long d'un axe de verrouillage (22) qui est orienté au moins sensiblement perpendiculairement à l'axe de déplacement.

9. Porte-charge (1) selon l'une des revendications précédentes, **caractérisé en ce que** le trajet de coulissement est limitée au moins dans la position d'extrémité déployée par au moins une butée de position d'extrémité, de préférence limitée dans les deux positions d'extrémité par des butées de position d'extrémité, et/ou **en ce qu'**un élément coulissant (17) du au moins un guide coulissant (6, 7) est fixé sur la base (1) et l'autre élément coulissant (16) du au moins un guide coulissant (6, 7) est fixé sur le dispositif de support (5).

10. Porte-charge (1) selon l'une des revendications précédentes, **caractérisé en ce que** la base (2) et le dispositif de support (5) sont reliés entre eux par au moins deux guides coulissants (6, 7) disposés à distance l'un de l'autre et s'étendant de préférence au moins sensiblement parallèlement l'un à l'autre, et un dispositif de verrouillage (20) est de préférence associé à chaque guide coulissant (6, 7).

11. Porte-charge (1) selon l'une des revendications précédentes, **caractérisé en ce que** la base (2) et le dispositif de support (5) sont reliés entre eux par exactement deux guides coulissants (6, 7), et la base (2) présente de préférence au moins deux éléments de base (3, 4) tubulaires ou en forme de tige, en particulier de section ronde ou carrée, et une extrémité axiale de chaque élément de base (3, 4) est fixée à un guide coulissant (6, 7) et l'autre extrémité axiale respective à l'autre guide coulissant (6, 7).

12. Porte-charge (1) selon l'une des revendications précédentes, **caractérisé en ce que** le dispositif de support (5) comprend au moins un rail de support allongé (9), qui forme sur le côté supérieur une rainure (10) en particulier en forme de U ou de V pour recevoir au moins une roue d'une bicyclette, le dispositif de support (5) comprend de préférence au moins une paire de deux rails de support allongés (9), qui sont disposés sur un axe commun et espacés l'un de l'autre dans la direction axiale, de préférence d'au moins 20 cm, en particulier de préférence d'au moins 30 cm.

13. Porte-charge (1) selon la revendication 12, **caractérisé en ce que** le au moins un rail de support (9) s'étend au moins sensiblement parallèlement à l'au moins un guide coulissant (6, 7), de préférence est formé intégralement avec l'un des éléments coulissants (16, 17) de l'au moins un guide coulissant (6, 7), de préférence forme un côté de l'un des deux éléments coulissants (16, 17).

14. Porte-charge (1) selon l'une des revendications précédentes, **caractérisé en ce que** le dispositif de support (5) présente un élément de base qui comporte un évidement ouvert en direction de la position d'extrémité déployée pour recevoir un dispositif du véhicule dans la position d'extrémité déployée du dispositif de support (5), l'élément de base étant notamment réalisé sous forme de profilé tubulaire en forme de B ou de double S.

15. Porte-charge (1) selon l'une des revendications précédentes, **caractérisé en ce que** l'arrangement est réalisé de telle sorte que le dispositif de support (5) est mobile horizontalement lorsqu'il est monté comme prévu.
